# EUROPEAN PATENT SPECIFICATION

(11) **EP 2 557 376 B1**
(45) Date of publication and mention of the grant of the patent: **19.03.2014**
(21) Application number: 11176966.7
(22) Date of filing: 09.08.2011
(51) Int. Cl.: F24J 2/46

(54) **Cleaning brush for the surface cleaning of solar modules**
Reinigungsbürste zur Oberflächenreinigung von Solarmodulen
Brosse de nettoyage pour le nettoyage de la surface de modules solaires

(43) Date of publication of application: 13.02.2013
(73) Proprietor: Manu Systems AG, 93053 Regensburg-Graß (DE)
(72) Inventor: Johansen, Søren Peter, 5792 Aarslev (DK)
(74) Representative: Hannke, Christian

(56) References cited:
- WO-A1-2004/091816
- DE-A1-102010 008 131
- DE-U1-202009 009 020
- DE-U1-202009 012 816
- KR-A- 20090 090 722

## Description

The invention relates to a cleaning apparatus for the surface cleaning of a plurality of solar modules arranged adjacent to one another and at an angle with respect to the horizontal and with at least one drive device connected to at least one upper edge region of the solar modules and capable of being driven along in a first direction in order to move the cleaning apparatus, according to the preamble of claim 1. Such an apparatus is disclosed in DE 20 2009009020 U.

Cleaning apparatus for the surface cleaning of solar modules are conventionally built up in such a way that robot-like apparatus are moved individually along on an individual or pre-set stretch on the surfaces of arrangements of a plurality of solar modules arranged adjacent to one another and they brush dirt off the surfaces by means of a brush unit arranged in front. Robot-like apparatus of this type on the one hand require limit devices on the edges of solar module arrangements of this type in order not to move over the edge regions of the solar module arrangement as a whole and fall off the arrangement as a result. On the other hand, robot-like apparatus of this type are limited in their capacity to clean the entire area of solar module arrangements of this type in a uniform manner, since only a small surface unit of the entire arrangement is always cleaned at the given moment and so frequently merely a shifting of the dirt to adjacent surface units takes place, which then has to be removed again.

In addition, robot-like apparatus of this type require a considerable time to clean the entire surface of the arrangement, since, on account of their limited size which is also caused by the inherent weight of the robot whilst taking into consideration the fact that arrangements of this type are frequently arranged obliquely, it is frequently necessary to run down the entire surface in a time-consuming manner. Furthermore, robot-like apparatus of this type have to travel in a bridging manner over edge regions between the individual solar modules which frequently have raised portions, without breakdowns occurring. In addition, robot-like apparatus of this type are designed in a complicated manner in their structure and have to be set individually to the respective size of the surface of the arrangement.

Cleaning apparatus are also known which can clean individual solar module area covers in that a cleaning belt which is reversed over rollers and which is provided with individual brush elements is rolled on the surface of the solar module, without the entire belt apparatus being altered in its position. It is rather that the individual brush elements which are arranged on the belt should remove the dirt in the running direction of the belt and convey it from the upper part of the solar module to the lower part of the solar module. Brush belts of this type, however, are fixed in their belt position and not capable of being altered, so that brushes of individual lengths have to be produced for each solar module size or possibly for the entire solar module arrangement which comprises a plurality of solar modules. This results in high production costs and application costs and complicated designs.

Consequently the object of the present invention is to make available a cleaning apparatus for the surface cleaning of a plurality of solar modules arranged adjacent to one another and at an angle with respect to the horizontal, which permit a rapid adaptation to different area extensions of the surface of the plurality of solar modules arranged adjacent to one another for a uniform and unitary cleaning of the entire surface, and is low in its product costs as well as is simple in its design.

This object is attained by providing an apparatus according to claim 1.

An essential point of the invention is that in the case of a cleaning apparatus for the surface cleaning a plurality of solar modules - arranged adjacent to one another and at an angle with respect to the horizontal - with at least one drive device connected to at least one common edge region of the solar modules and capable of travelling in a first direction for moving the cleaning apparatus at least one substantially cylindrical elongated brush unit is provided, which for cleaning purposes rotates about its longitudinal axis with a direction of rotation capable of being pre-determined and at a rotational speed capable of being pre-determined, in which case the brush unit comprises a plurality of individual cylindrical brush elements which are arranged one behind the other on the end face. On account of the arrangement of individual short cylindrical brush portions or brush elements which according to the invention can be connected to one another, it is made possible for a rapid adaptation of the brush unit and thus the entire cleaning apparatus to different lengths of a solar module arrangement to be possible and as a result a uniform cleaning of the entire surface is achieved by means of the brush unit travelling along over the entire length of the solar module arrangement. To this end, the brush unit extends in its longitudinal axial direction over all the solar modules arranged adjacent to one another in this direction and it is connected to the drive device in order to be moved at a right angle to the longitudinal axial direction, i.e. in the first direction. In this way, in accordance with a preferred embodiment the longitudinal axial direction of the brush is orientated as a second direction at a right angle to the first direction. Alternatively, the second direction can be orientated at any desired angle from 0° to 90° to the first direction, in order for example to permit an oblique or angled travel down the entire surface or possibly intentionally an angled orientation of the brush unit, in which case the brush unit is nevertheless moved in the first direction. This has the advantage that on account of an oblique arrangement of the brush unit in this way the dirt can be brought downwards from above and possibly drops down below the lower edge region of the solar module arrangement.

In order to connect individual brush elements of this type, which are in the form of a cylinder, to one another at the end face in such a way that in their entirety as a brush unit they likewise represent a cylinder, but with a greater length with respect to its longitudinal axis, at least one of the end faces of each brush element has recesses into which projections - made complementary thereto - of an end face of the adjacent brush element engage.

In the case of these remarks it should be noted that solar module arrangements of this type are as a rule arranged obliquely, i.e. in accordance with the optimum solar radiation they are arranged so as to be higher in their rear region than in their front region. In this case the front region should reproduce the lower edge region and the rear region should reproduce the upper edge region.

Cleaning apparatus of this type with the brush unit is not only simple in its design but is also simple in its manufacture and thus inexpensive in its production. It would only be necessary for the individual brush elements to be made available in any desired number in order to be able to cover a specified length of the solar module arrangement, in which case it is preferable for the brush unit to extend in the longitudinal axial direction over all the solar modules arranged adjacent to one another in this direction.

Preferably, the recesses are distributed over an entire circular edge of a cylinder cover and the projections - designed in a complementary manner - of the adjacent brush element are likewise distributed over the entire circular edge of a cylinder cover. In this case it is preferable for the recesses to be made corrugated, arcuate, triangular and/ or square in their cross-section, i.e. when the cylinder is viewed from the side. In this way, the recesses and projections can engage one in the other in a simple and rapid manner and so the individual brush elements can be mutually driven in the direction of movement. The actual rotational drive takes place at the two ends of the brush unit as a whole.

In order to keep the individual brush elements together in a reliable manner during the rotational movement and during their movement together with the drive device over the surface of the solar module arrangement, without the recesses and projections of the adjacent end faces being separated from one another, the cylindrical brush elements arranged one behind the other have in each case at least one through opening which extends from one end face to the other and through which at least one cable common to all the brush elements extends. This cable is fastened at the end under tensile stressing to a brush frame, so that the stressed cable holds together the individual brush elements, even when a raised portion is present on the surface of the solar modules over which the brush unit has to move away. Raised portions of this type can be for example edge on the individual solar modules, in which case the individual solar modules are arranged adjacent to one another to form a solar module arrangement. It is advantageous for a keeping together of the individual brush elements in this way by means of a cable, which is preferably a wire cable, also to be suitable for a certain degree of flexibility to exist along the longitudinal axial direction of the brush unit in the radial direction, and this can then lead to the entire cleaning apparatus being able to run in a trouble-free manner over the surface of the solar module arrangement in a first direction, without slippage or displacement of the cleaning apparatus taking place.

As an alternative to the use of a wire cable a common rod can also be drawn through all the through openings of the brush elements.

The through opening in each cylindrical brush element is preferably arranged centrally along the centre axis and as a result produces at the same time the cylinder cover, of which the circular edge on the end face has the recesses or projections respectively.

In accordance with a preferred embodiment the direction of rotation of the rotating brush unit on the surface of the solar modules is opposite the direction of the movement of the drive device.

In its further development of the invention the brush frame is connected on a longitudinal side by means of at least one connecting element to the drive device which is elongatable in the second direction.

In accordance with a preferred embodiment at least two support elements in the manner of rollers and/or wheels and/or brushes for the suspended support of the cleaning apparatus are present on the upper edge region in such a way that the entire cleaning apparatus is suspended with portions of its inherent weight on a top edge of the upper edge region.

Since each solar module has a frame, the brush unit can contain specific brush elements in the frame areas, i.e. the top edge and the upper edge regions, in order to clean the frame parts on a specific way. These specific brush elements clean the frame parts e.g. by using harder brushes for the elements being responsible for cleaning the surfaces of the solar cells.

Further advantageous embodiments are set out in the sub-claims.

Advantages and expedient features are evident in the accompanying description in conjunction with the drawing. In the drawing
- Fig. 1: is a diagrammatic illustration of a solar module arrangement with a cleaning apparatus according to the invention;
- Fig. 2: is a diagrammatic illustration of a brush unit of the cleaning apparatus accord-ing to the invention with brush elements arranged adjacent to one another in rows;
- Fig. 3: is a side view of a brush element for the cleaning apparatus according to the invention;
- Fig. 4: is a front-end illustration of a brush element for the cleaning apparatus according to the invention;
- Fig. 5: is a diagrammatic cut-away illustration of part of a cleaning brush with an associated brush frame according to a preferred embodiment of the invention, and
- Fig. 6: is a perspective plan view of a cleaning brush with an associated brush frame locally together with a portion of the solar module arrangement according to an embodiment of the invention.

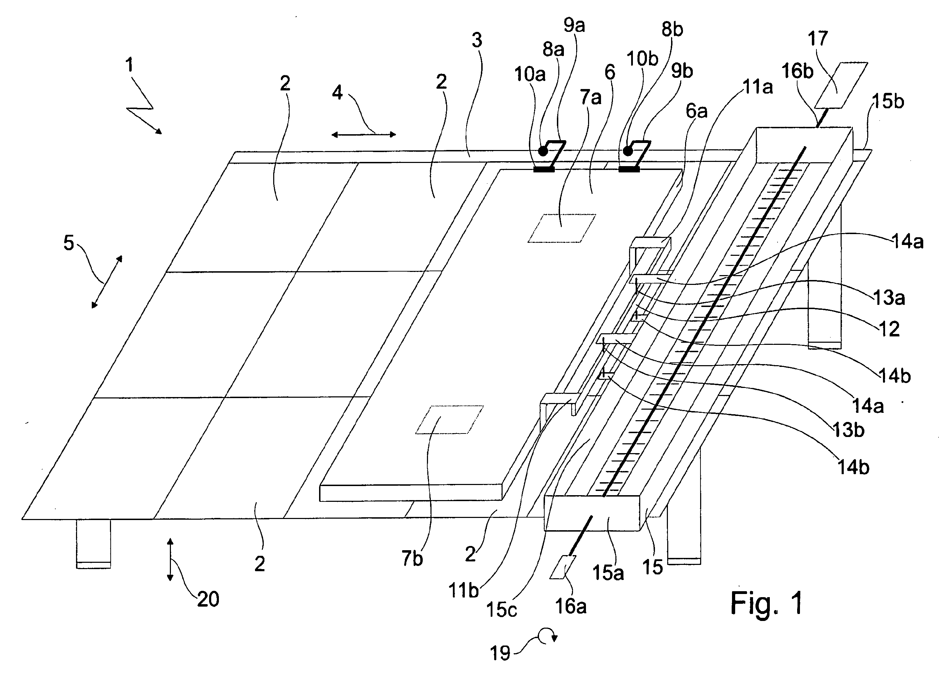

A solar module arrangement with a plurality of solar modules and with a cleaning apparatus according to an embodiment of the invention is reproduced in a diagrammatic illustration in figure 1. It is evident from this illustration that the overall view 1 has a cleaning apparatus and a plurality of solar modules 2 arranged adjacent to one another, the solar modules 2 being arranged adjacent to one another both in a first direction 4 and in a second direction. This results in a common surface of the entire solar module arrangement, which comprises the surfaces of the individual solar modules 2.

The solar module arrangement is inclined at an angle to the horizontal in order to optimize the solar radiation in its efficiency. In this case the solar module arrangement is set higher in the rear region than in the front region.

The individual solar modules 2 arranged in the upper region have a common edge region 3 on which the entire cleaning apparatus according to the invention is suspended. In addition, the cleaning apparatus is supported with respect to the surfaces of the individual solar modules, so that the inherent weight of the cleaning apparatus is carried both by the surfaces of the solar modules and by the edge region 3.

For the suspension of the cleaning apparatus on the upper edge region 3, rollers 8a and 8b are mounted on the upper side of the edge region 3. These rollers 8a, 8b are connected to a fastening element 10a, 10b by means of a lever structure 9a, 9b, in which case the drive device 6 is fastened to the fastening element 10a and 10b. Alternatively, instead of the drive device 6, a brush frame 15 in which a cylindrical elongated brush can be attached.

The drive device 6 is provided on its underside, i.e. facing the surface of the solar modules 2, with two drive units 7a and 7b which are preferably caterpillar-like rubber loops which are guided around the cylinder and are driven by this. These drive units 7a and 7b are used for a movement of the drive device 6 in the direction of the first direction 4 or the movement direction 4, so that rolling along by means of the rollers 8a and 8b on the edge region 3 and travelling of the drive device 6 together with the brush frame 15 from left to right or vice versa are possible.

In order to fasten the brush frame 15, the right-hand side 6a of the drive device 6 has two projection elements 11 a and 11 b on which is fastened a rod 12 which extends in an elongate manner and which extends in the second direction. This rod 12 has bores in order to receive in them two rods 13a and 13b which are orientated in the vertical direction 20.

The rods 13a and 13b are fastened to the brush frame 15 on its wall 15c on the left-hand side by means of holding elements 14a, 14b arranged on the top side and underside.

A design of this type makes it possible for the rods 12 to be able to move upward and downwards (in the direction 20) on account of the loose arrangement of the two rods 13a and 13b inside the bores in these rods and as a result for the brush frame 15 to be able to give way upwards in the event of irregularities occurring on the surfaces of the solar modules 2. The brush frame 15 is provided in the interior thereof with the cylindrical brush unit 18 which is made cylindrical, the brush unit 18 extending over the entire length with respect to the direction 5 of the entire solar module arrangement, so that the solar module arrangement is cleaned from the very top to the very bottom in a reliable manner. The brush unit is fastened so as to be able to rotate by means of a longitudinal axis at the end face on the brush frame walls 15a and 15b. This becomes clear by the reference signs 16a and 16b.

An additional motor 17 allows the driving of the longitudinal axis 16a, 16b to cause the brush unit 18 to rotate.

The rotation of the brush unit takes place preferably in accordance with the arrow direction 19, in such a way that on the surface of the solar modules the direction of rotation takes place opposite the direction of movement of the entire cleaning apparatus from left to right according to the direction 4.

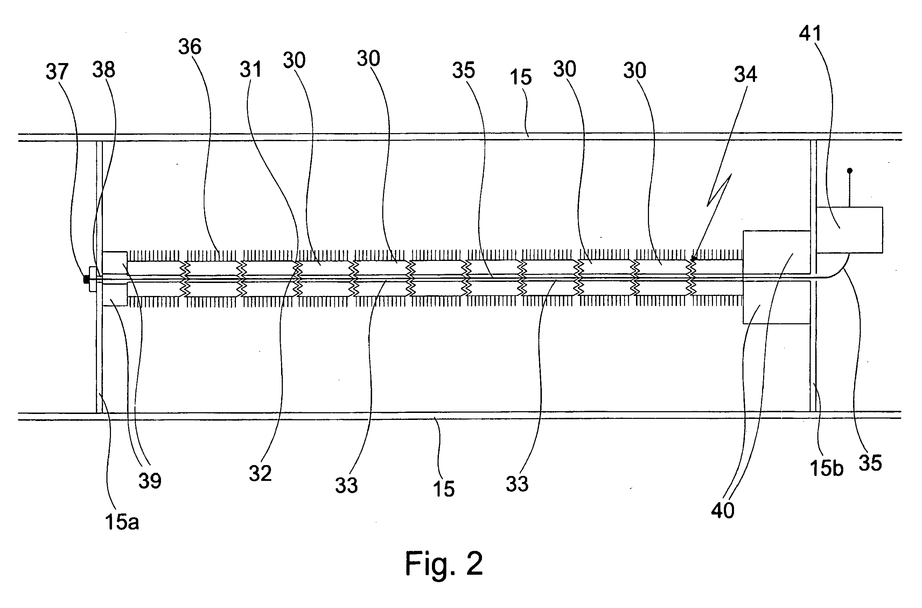

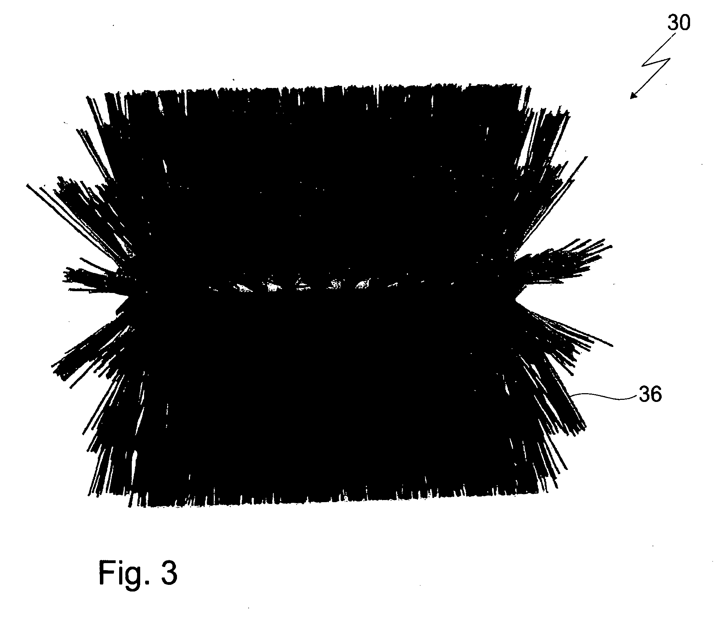

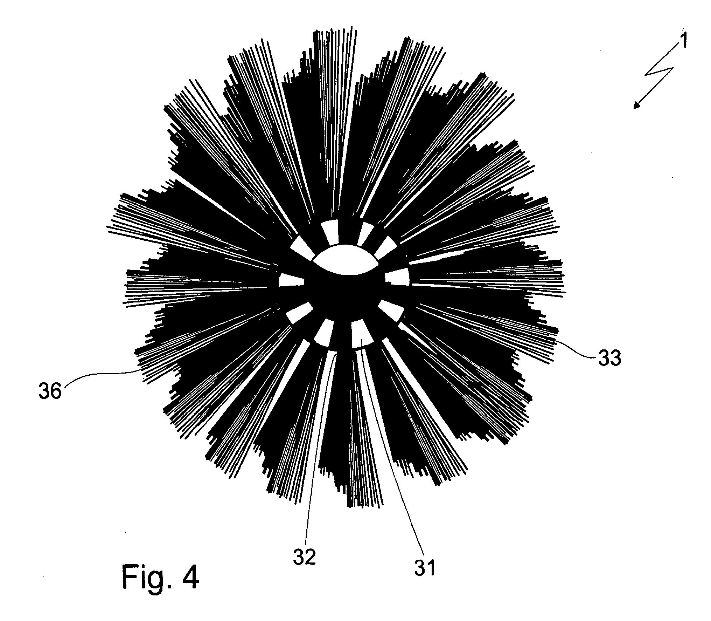

The brush unit of the cleaning device according to the invention, as formed from a plurality of individual brush elements, is shown in a plan view in figure 2. According to this illustration, a brush unit comprises a plurality of individual brush elements 30, as reproduced as a side view in figure 3 and as a front-end view in figure 4. As shown in the illustrations according to figure 3 and figure 4, each brush element in the central region has a through bore 33 which extends in the longitudinal axial direction of the cylindrical brush element along its centre axis. The through bore is used for receiving a wire cable.

A cylinder cover, which has individual depressions and recesses 31 and projections or raised portions 32 on its end face, is preferably formed from plastics material around the through bore. These projections and recesses 31, 32 can be arranged on both sides of the brush element, i.e. on each end face.

In addition, a plurality of bristles 36, which are required for cleaning purposes, are arranged extending radially.

It may be seen in figure 2 that the individual brush elements 30 are arranged adjacent to one another in rows, as the individual recesses 31 engage in projections 32 of the adjacent one of the respective brush element. As a result, a reliable connection is formed between the individual brush elements not only in the peripheral direction during the rotation, but also in the radial direction.

On account of the arrangement of the individual brush elements 30 adjacent to one another in rows, the through openings 33 are likewise arranged adjacent to one another in rows in alignment, so that a wire cable 35 which is set with tensile stress at the end by means of a stressing apparatus 41, can be drawn through these through openings 33. The stressing apparatus 41 is arranged on a cross member 15b of the brush frame.

The wire cable 35 is firmly clamped at the end on a further cross member 15a of the brush frame 15 by means of a holding-down element 37 which is situated inside the cross member 15a by way of the region of a through hole 38. A spacer member 39 on one side and a spacer member 40 on the other side ensure a reliable firm clamping of the individual brush elements 30 between the cross members 15a and 15b of the brush frame 15. These spacer members 39 and 40 can at the same time be motors or connected thereto, in order to set the entire arrangement of a brush unit, which is formed from a plurality of brush elements, into a rotational movement.

It is clearly evident from the illustration reproduced in figure 2 that the end faces 34 of the individual brush elements engage one in the other in a reliable manner and with non-positive locking, when they are compressed by means of a draw cable by suitable compression of the two cross members 15a and 15b.

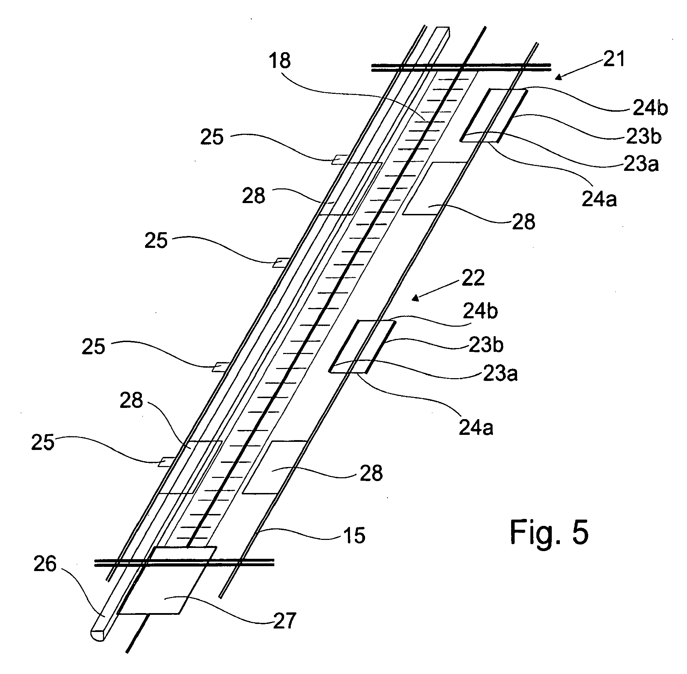

A cleaning brush unit according to a preferred embodiment is reproduced in figure 5 in a cut-away illustration which reproduces a perspective view from below. The cleaning brush unit 18 is in turn arranged inside a brush frame 15, in which case a motor 27 can be arranged inside the cross member on grounds of stability.

The motor 27 is used for the rotational movement of the brush unit 18.

On account of its great lengths which can amount for example to from 1 m to 10 m, the brush unit 18 can undergo oscillations in the radial direction which are not desired during the movement. To this end, the inside of the brush frame has attached to it stabilization spacer members 28 which are intended to prevent oscillation in a reciprocating manner which occurs in the vertical direction 20 in the movement direction, by this brush unit being restricted in its movement by these stabilization spacer members 28.

In addition, support elements 21, 22 in the manner of rollers or wheels, which in each case have two rollers 23a, 23b which are connected to each other by means of two connecting plates 24a and 24b, are arranged on the underside. Rollers 23a, 23b of this type are used for supporting the brush unit and the brush frame 15 with respect to the surfaces of the solar modules and for carrying out a rolling movement in the movement direction 4. When rollers 23a, 23b of this type are used, a stable movement from left to right or from right to left in the direction 4 is made possible, without major deviations occurring with respect to the movement upwards or downwards.

In addition, a water application device is provided which essentially comprises a tank 26 and individual water nozzles 25, the water nozzles 25 preferably being arranged in front of the brush unit 18, to permit water for spraying the surface of the solar modules before the brush unit 18 travels over the surface of the solar modules.

As an alternative, an extern water tank can be used. This water tank can be filled up with rain water in order to reduce the consumption of drinkable water. An eaves gutter collects water flowing from the individual solar panels. This module water (solar module water) is rain water, which is collected at the lower side of the solar modules by passing the surface of the solar modules. Further, the funnel only collects pure (clean) rain water. The water is then cleaned/filtered and stored in some reservoir placed below ground level. From here a pump system can retrieve the water and provide the cleaning apparatus with the necessary cleaning water- perhaps through some surface irrigation system. The tank can contain ten thousand litre spring water or/and rain water. The pump system, the reservoir/tank and the cleaning/filtering system can be positioned outside the cleaning apparatus and the solar modules (photovoltaic modules).

Further, by using specific sensors, dirty areas on the surfaces of the solar modules can be recognized. Using a specific control system enables that the cleaning apparatus can move forward and backward for several times, in order to remove the dirty area completely. After the sensors have recognized that the dirty area has disappeared, the control system controls the cleaning apparatus to move forward until the next dirty area will be recognized. The operation of this sensor control system is completely automatic.

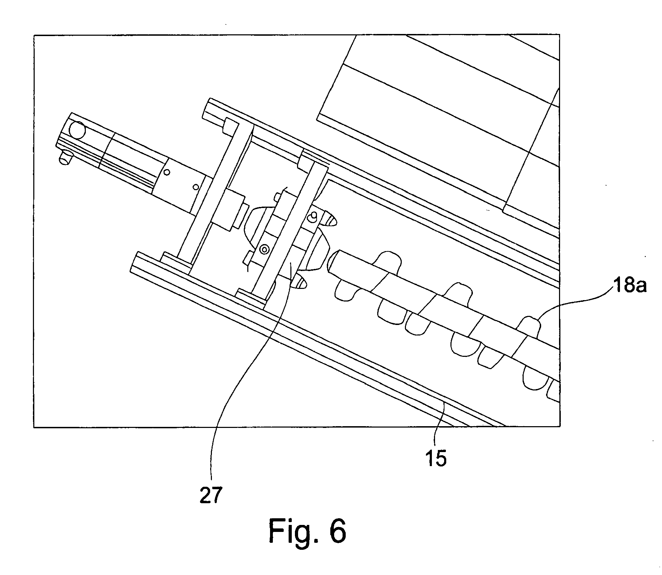

A cut-away view of a cleaning brush unit together with the brush frame according to an embodiment of the invention is reproduced in a plan view in figure 6. Components which are the same and which have the same significance are provided with the same reference signs.

The brush frame 15 in turn has inside a cross member a motor 27 which is arranged therein and which is used for the rotation of the brush unit 18.

The brush unit 18 is applied to the surface of the solar module 2.
In this case the brush unit 18 advantageously has brush elements with a spiral arrangement of the brush bristles 18a so as to effect in this way a removal of the dirt to the lower edge region of the entire solar module arrangement. The cleaning effect of the spiral arrangement of the brush bristles of brush elements is reduced compared to a complete cylindrical arrangement of the brush bristles. However, in case of the spiral arrangement there is a reduced frictional force when these brush elements are rotating over the surface of the solar modules. Thus, there is a reduced input energy in order to bring the brush elements in rotation. Since a typical solar module is more difficult to be cleaned at the edge areas, it is possible to combine a brush unit by using brush elements with cylindrical complete surrounding bristles at the edge area and brush elements with a spiral arrangement of the brush bristles in the centre part of the solar modules. Preferably, the brush elements with cylindrical arranged bristles are positioned at the lower edge area and the brush elements with the spiral arrangement of the brush bristles are positioned in the centre and in the upper edge area of the solar module, since the most dirty areas are in the lower part of the solar module surfaces.

### List of references

- 1: overall view
- 2: solar modules
- 3: edge region
- 4: first direction
- 5: second direction
- 6: drive device
- 6a: right-hand side
- 7a, 7b: drive units
- 8a, 8b: rollers
- 9a, 9b: lever structure
- 10a, 10b: fastening element
- 11a, 11b: projection element
- 12: rod
- 13a, 13b: rods
- 14a, 14b: holding element
- 15: brush frame
- 15a, 15b: brush frame walls
- 15c: frame wall
- 16a, 16b: longitudinal axis
- 17: additional motor
- 18: brush unit
- 18a: brush elements
- 19: arrow direction
- 20: vertical direction
- 21, 22: support elements
- 23a, 23b: rollers
- 24a, 24b: connecting plates
- 25: water nozzles
- 26: tank
- 27: motor
- 28: spacer
- 30: brush elements
- 31: recesses
- 32: projections
- 33: through bores
- 35: wire cable
- 36: bristles
- 37: holding-down element
- 38: through hole
- 39, 40: spacer member
- 41: stressing apparatus

## Claims

1. A cleaning apparatus for the surface cleaning of a plurality of solar modules (2) arranged adjacent to one another and at an angle with respect to the horizontal, comprising
at least one drive device (6) configured to be connected to at least one common upper edge region (3) of the solar modules (2) and capable of travelling in a first direction (4) for moving the cleaning apparatus
with
at least one substantially cylindrical elongate brush unit (18) which for cleaning purposes rotates about its longitudinal axis (16a, 16b) with a direction of rotation (19) capable of being pre-determined and at a rotational speed capable of being pre-determined, wherein the at least one brush unit (18) comprises a plurality of cylindrical brush elements (30) which are arranged one behind the other at the end face, the at least one brush unit (18) extends in the longitudinal axial direction (5) so as to be able to cover a plurality of solar modules (2) arranged adjacent to one another in this direction (5), and the brush unit (18) is connected to the at least one drive device (6),
**characterized in that** at least one end face (34) of each brush element (30) has recesses (31) into which projections (32) - made complementary thereto - of an end face (34) of the adjacent brush element (30) engage.

2. A cleaning apparatus according to claim 1, **characterized in that** the recesses (31) and the projections (32) made complementary thereto are made corrugated, arcuate, triangular and/or square in their cross-section.

3. A cleaning apparatus according to any one of the preceding claims, **characterized in that** the cylindrical brush elements (30) arranged one behind the other have in each case at least one through opening (33) which extends from one end face (34) to the other and through which at least one cable (35) common to all the brush elements extends.

4. A cleaning apparatus according to claim 3, **characterized in that** the at least one cable (35) is fastened at the end under tensile stressing to a brush frame (15, 15a, 15b).

5. A cleaning apparatus according to any one of claims 1 to 2, **characterized in that** the cylindrical brush elements (30) arranged one behind the other have in each case at least one through opening (33) which extends from one end face (34) to the other and through which at least one rod common to all the brush elements extends.

6. A cleaning apparatus according to any one of claims 3 to 5, **characterized in that** the at least one through opening (33) in the cylindrical brush elements (30) is arranged centrally along the centre axis.

7. A cleaning apparatus according to any one of the preceding claims, **characterized in that** the at least one brush unit (18) extends in the longitudinal axial direction (5) over all the solar modules (2) arranged adjacent to one another in this direction (5), and the at least one brush unit (18) is connected to the at least one drive device (6). ,

8. A cleaning apparatus according to any one of the preceding claims, **characterized in that** the longitudinal axial direction (5) of the at least one brush unit (18) is orientated as a second direction (5) at a right angle to the first direction (4).

9. A cleaning apparatus according to any one of the preceding claims, **characterized in that** the direction of rotation (19) of the at least one rotating brush unit (18) on the surface of the solar modules is opposite a direction (4) of the movement of the at least one drive device (6).

10. A cleaning apparatus according to any one of claims 4 to 9, **characterized in that** the brush frame (15) is connected on a longitudinal side (15c) by means of at least one connecting element (11 a, 11 b) to the at least one drive device (6) which is made elongate in the second direction (5).

11. A cleaning apparatus according to any one of the preceding claims, **characterized by** at least two support elements (8a, 8b; 9a, 9b; 10a, 10b) in the manner of rollers and/or wheels and/or brushes for the suspended support of the cleaning apparatus on the upper edge region (3) in such a way that the entire cleaning apparatus is suspended with portions of its inherent weight on a top edge of the upper edge region (3).

12. A cleaning apparatus according to any one of the preceding claims, **characterized in that** brush elements have brush bristles with a spiral arrangement.

13. A cleaning apparatus according to any one of the preceding claims, **characterized by** a water application device comprising a water tank and individual water nozzles (25), wherein the water nozzles (25) are arranged in front of the at least one brush unit (18).

14. A cleaning apparatus according to any one of the preceding claims, **characterized in that** the rotation speed of the at least one brush unit is variable.

## Patentansprüche

1. Reinigungsgerät zur Oberflächenreinigung einer Vielzahl von Solarmodulen (2) die benachbart zueinander und in einem Winkel bezüglich der Horizontalen angeordnet sind, umfassend mindestens eine Antriebsvorrichtung (6), die dafür konfiguriert ist mit mindestens einem gemeinsamen oberen Randbereich (3) der Solarmodule (2) verbunden zu sein und dafür geeignet ist, verschiebbar zu sein in eine erste Richtung (4) zum Bewegen des Reinigungsgeräts mit einer im Wesentlichen länglichen zylindrischen Bürsteneinheit (18), die zu Reinigungszwecken um ihre Längsachse (16a, 16b) mit einer Rotationsrichtung (19), die vorbestimmt werden kann, und einer Rotationsgeschwindigkeit, die vorbestimmt werden kann, rotiert, wobei die mindestens eine Bürsteneinheit (18) eine Vielzahl von zylindrischen Bürstenelementen (30) umfasst, die hintereinander an der Stirnfläche angeordnet sind, wobei die mindestens eine Bürsteneinheit (18) sich in die Längsachsenrichtung (5) erstreckt so dass es möglich ist eine Vielzahl von Solarmodulen (2) zu bedecken, die in dieser Richtung (5) benachbart zueinander angeordnet sind, und wobei die Bürsteneinheit (18) mit der mindestens einen Antriebsvorrichtung verbunden ist, **dadurch gekennzeichnet, dass** mindestens eine Stirnfläche (34) jedes Bürstenelements Aussparungen (31) aufweist, wohinein Vorsprünge (32), die komplementär dazu sind, einer Stirnfläche des benachbarten Bürstenelements eingreifen.

2. Reinigungsgerät nach Anspruch 1, **dadurch gekennzeichnet, dass** die Aussparungen (31) und die Vorsprünge (32), die komplementär dazu sind, gerippt, gekrümmt, dreieckig und/oder quadratisch in ihrem Querschnitt gefertigt sind.

3. Reinigungsgerät nach einem der vorangegangenen Ansprüche, **dadurch gekennzeichnet, dass** die hintereinander angeordneten zylindrischen Bürstenelemente (30) jeweils mindestens eine durchgehende Öffnung aufweisen, die sich von einer Stirnseite (34) bis zur anderen erstreckt und durch welche sich mindestens ein Kabel (35) erstreckt, das alle Bürstenelemente gemeinsam haben.

4. Reinigungsgerät nach Anspruch 3, **dadurch gekennzeichnet, dass** das mindestens eine Kabel (35) an dem Ende unter Zugspannung an einem Bürstenrahmen (15, 15a, 15b) befestigt ist.

5. Reinigungsgerät nach einem der Ansprüche 1 und 2, **dadurch gekennzeichnet, dass** die hintereinander angeordneten zylindrischen Bürstenelemente (30) jeweils mindestens eine durchgehende Öffnung (33) aufweisen, die sich von einer Stirnseite (34) zu der anderen erstreckt und durch welche sich mindestens eine Stange erstreckt, die alle Bürstenelemente gemeinsam haben.

6. Reinigungsgerät nach einem der Ansprüche 3 bis 5, **dadurch gekennzeichnet, dass** die mindestens eine durchgehende Öffnung (33) in den zylindrischen Bürstenelementen (30) mittig entlang der Mittelachse angeordnet ist.

7. Reinigungsgerät nach einem der vorangegangenen Ansprüche, **dadurch gekennzeichnet, dass** die mindestens eine Bürsteneinheit (18) sich in Längsachsenrichtung (5) über alle Solarmodule (2), die in dieser Richtung (5) benachbart zueinander angeordnet sind, erstreckt, und dass die mindestens eine Bürsteneinheit (18) mit der mindestens einen Antriebsvorrichtung (6) verbunden ist.

8. Reinigungsgerät nach einem der vorangegangenen Ansprüche, **dadurch gekennzeichnet, dass** die Längsachsenrichtung (5) der mindestens einen Bürsteneinheit (18) als eine zweite Richtung (5) in einem rechten Winkel zu der ersten Richtung (4) orientiert ist.

9. Reinigungsgerät nach einem der vorangegangenen Ansprüche, **dadurch gekennzeichnet, dass** die Rotationsrichtung (19) des mindestens einen Bürstenelements (18) auf der Oberfläche der Solarmodule entgegen einer Richtung (4) der Bewegung des mindestens einen Antriebsvorrichtung (6) ist.

10. Reinigungsgerät nach einem der Ansprüche 4 bis 9, **dadurch gekennzeichnet, dass** der Bürstenrahmen (15) auf der Längsseite (15c) mittels mindestens einem Verbindungselement (11a, 11b) mit der mindestens einen Antriebsvorrichtung (6), die länglich in der zweiten Richtung (5) gefertigt ist, verbunden ist.

11. Reinigungsgerät nach einem der vorangegangenen Ansprüche, **gekennzeichnet durch** mindestens zwei Stützelemente (8a, 8b, 9a, 9b, 10a, 10b) in der Art von Rollen und/oder Rädern und/oder Bürsten für die Aufhängestützung des Reinigungsgeräts an dem oberen Randbereich (3) derart, dass das gesamte Reinigungsgerät an Teilen seines inhärenten Gewichts auf der oberen Randbereich (3) aufgehängt ist.

12. Reinigungsgerät nach einem der vorangegangenen Ansprüche, **dadurch gekennzeichnet, dass** Bürstenelemente Bürstenborsten mit spiralförmiger Anordnung aufweisen.

13. Reinigungsgerät nach einem der vorangegangenen Ansprüche, **gekennzeichnet durch** eine Wassereinsatzvorrichtung, die einen Wassertank und einzelne Wasserdüsen (25) umfasst, wobei die Wasserdüsen (25) vor der mindestens einen Bürsteneinheit (18) angeordnet sind.

14. Reinigungsgerät nach einem der vorangegangenen Ansprüche, **dadurch gekennzeichnet, dass** die Rotationsgeschwindigkeit der mindestens einen Bürsteneinheit variabel ist.

## Revendications

1. Appareil de nettoyage pour le nettoyage de surface d'une pluralité de modules solaires (2) agencés adjacents les uns aux autres et selon un angle par rapport à l'horizontale, comprenant : au moins un dispositif d'entraînement (6) configuré pour être relié à au moins une région de bord supérieure commune (3) des modules solaires (2) et capable de se déplacer dans une première direction (4) pour déplacer l'appareil de nettoyage avec au moins une unité de brosse allongée sensiblement cylindrique (18) qui, à des fins de nettoyage, tourne autour de son axe longitudinal (16a, 16b) avec une direction de rotation (19) qui peut être prédéterminée et à une vitesse de rotation qui peut être prédéterminée, dans lequel ladite au moins une unité de brosse (18) comprend une pluralité d'éléments de brosse cylindriques (30) qui sont agencés les uns derrière les autres au niveau de la face d'extrémité, ladite au moins une unité de brosse (18) s'étend dans la direction axiale longitudinale (5) de manière à être capable de couvrir une pluralité d'au moins un des modules solaires (2) agencés adjacents les uns aux autres dans cette direction (5), et l'unité de brosse (18) est reliée au dit au moins un dispositif d'entraînement (6), **caractérisé en ce qu'**au moins une face d'extrémité (34) de chaque élément de brosse (30) comporte des évidements (31) dans lesquels des protubérances (32) - réalisées de manière à être complémentaires à ceux-ci - d'une face d'extrémité (34) de l'élément de brosse adjacent (30) s'engagent.

2. Appareil de nettoyage selon la revendication 1, **caractérisé en ce que** les évidements (31) et les protubérances (32) réalisées de manière à être complémentaires à ceux-ci sont réalisés de manière ondulée, en forme d'arc, triangulaire et/ou carrée dans leur section transversale.

3. Appareil de nettoyage selon l'une quelconque des revendications précédentes, **caractérisé en ce que** les éléments de brosse cylindriques (30) agencés les uns derrière les autres comportent, dans chaque cas, au moins une ouverture traversante (33) qui s'étend d'une face d'extrémité (34) à l'autre et à travers laquelle au moins un câble (35) commun à tous les éléments de brosse s'étend.

4. Appareil de nettoyage selon la revendication 3, **caractérisé en ce que** ledit au moins un câble (35) est fixé à l'extrémité sous une contrainte de tension à un cadre de brosse (15, 15a, 15b).

5. Appareil de nettoyage selon l'une quelconque des revendications 1 à 2, **caractérisé en ce que** les éléments de brosse cylindriques (30) agencés les uns derrière les autres comportent, dans chaque cas, au moins une ouverture traversante (33) qui s'étend d'une face d'extrémité (34) à l'autre et à travers laquelle au moins une tige commune à tous les éléments de brosse s'étend.

6. Appareil de nettoyage selon l'une quelconque des revendications 3 à 5, **caractérisé en ce que** ladite au moins une ouverture traversante (33) dans les éléments de brosse cylindriques (30) est agencée au centre le long de l'axe central.

7. Appareil de nettoyage selon l'une quelconque des revendications précédentes, **caractérisé en ce que** ladite au moins une unité de brosse (18) s'étend dans la direction axiale longitudinale (5) sur tous les modules solaires (2) agencés adjacents les uns aux autres dans cette direction (5), et ladite au moins une unité de brosse (18) est reliée au dit au moins un dispositif d'entraînement (6).

8. Appareil de nettoyage selon l'une quelconque des revendications précédentes, **caractérisé en ce que** la direction axiale longitudinale (5) de ladite au moins une unité de brosse (18) est orientée en tant que deuxième direction (5) selon un angle droit par rapport à la première direction (4).

9. Appareil de nettoyage selon l'une quelconque des revendications précédentes, **caractérisé en ce que** la direction de rotation (19) de ladite au moins une unité de brosse rotative (18) sur la surface des modules solaires est opposée à une direction (4) du déplacement dudit au moins un dispositif d'entraînement (6).

10. Appareil de nettoyage selon l'une quelconque des revendications 4 à 9, **caractérisé en ce que** le cadre de brosse (15) est relié, d'un côté longitudinal (15c), au moyen d'au moins un élément de liaison (11a, 11b), au dit au moins un dispositif d'entraînement (6) qui est réalisé de manière à être allongé dans la deuxième direction (5).

11. Appareil de nettoyage selon l'une quelconque des revendications précédentes, **caractérisé par** au moins deux éléments de support (8a, 8b ; 9a, 9b ; 10a, 10b) à la manière de rouleaux et/ou de roues et/ou de brosses pour le support suspendu de l'appareil de nettoyage dans la région de bord supérieure (3) de manière à ce que l'appareil de nettoyage entier soit suspendu avec des parties de son poids inhérent sur un bord supérieur de la région de bord supérieure (3).

12. Appareil de nettoyage selon l'une quelconque des revendications précédentes, **caractérisé en ce que** les éléments de brosse comportent des poils de brosse avec un agencement en spirale.

13. Appareil de nettoyage selon l'une quelconque des revendications précédentes, **caractérisé par** un dispositif d'application d'eau comprenant un réservoir d'eau et des buses d'eau (25) individuelles, dans lequel les buses d'eau (25) sont agencées à l'avant de ladite au moins une unité de brosse (18).

14. Appareil de nettoyage selon l'une quelconque des revendications précédentes, **caractérisé en ce que** la vitesse de rotation de ladite au moins une unité de brosse est variable.
